# EUROPEAN PATENT SPECIFICATION

(11) **EP 1 346 912 B1**
(45) Date of publication and mention of the grant of the patent: **21.11.2007**
(21) Application number: 03075830.4
(22) Date of filing: 21.03.2003
(51) Int. Cl.: B64D 11/02, A47K 3/28

(54) **Aircraft passenger cleansing system**
Reinigungssystem für Flugzeugpassagiere
Système de nettoyage pour des passagers d'un avion

(30) Priority: 22.03.2002 US 104331
(43) Date of publication of application: 24.09.2003
(73) Proprietor: The Boeing Company, Seattle, Washington 98124-2207 (US)
(72) Inventor: Jeanne, Guerin, Mukilteo, WA (US); Shimasaki, Kevin, Woodinville, WA (US); Prochaska, Charles, Greenbank, WA 98253 (US)
(74) Representative: McLeish, Nicholas Alistair Maxwell

(56) References cited:
- EP-A- 0 731 020
- DE-A- 19 956 668
- GB-A- 2 266 662
- US-A- 4 130 120

## Description

The present invention relates to bathing systems and more particularly to bathing in an aircraft environment.

The prior art includes single door entry bathing chambers for sequencing bathing functions while in a sitting or prone position, e.g., US Patent 4,130,120 directed to a variety of benefits such as steam generation, infra-red, and ultra-violet light.

GB-A-2 266 662 discloses a combined shower and dryer for washing and drying a human body in a single enclosure. The passenger is wetted, washed, rinsed and dried. The passenger can freely control the switching on and off of the respective steps.

The present invention relates specifically to a cleansing method wherein available space and time limitations require high speed methods for cleansing persons or passengers while maintaining sanitation in the process to prevent transmission of illnesses to persons sequencing through the present invention.

### BRIEF DESCRIPTION OF THE SEVERAL VIEWS OF THE DRAWINGS

Figure 1 is a plan view of an embodiment of the present invention showing a cleansing system aboard an aircraft for passengers including a lavatory, shower and changing room combined in a single passenger floor area;

Figure 2 is a floor plan of a further embodiment of the present invention showing a cleansing system aboard the aircraft having separate changing room and shower areas useable in aircraft having increased floor space availability;

Figure 3 is illustrative of the cleansing system of Figure 2 however showing passenger utilization of changing room and shower areas simultaneously by two passengers; and,

Figure 4 is a perspective view of the apparatus and passenger operating controls for sequencing the cleansing process in the shower areas of the embodiments of the present invention; and,

Figure 5 is a system flow diagram illustrative of the present aircraft passenger cleaning system process steps.

### DETAILED DESCRIPTION OF THE INVENTION

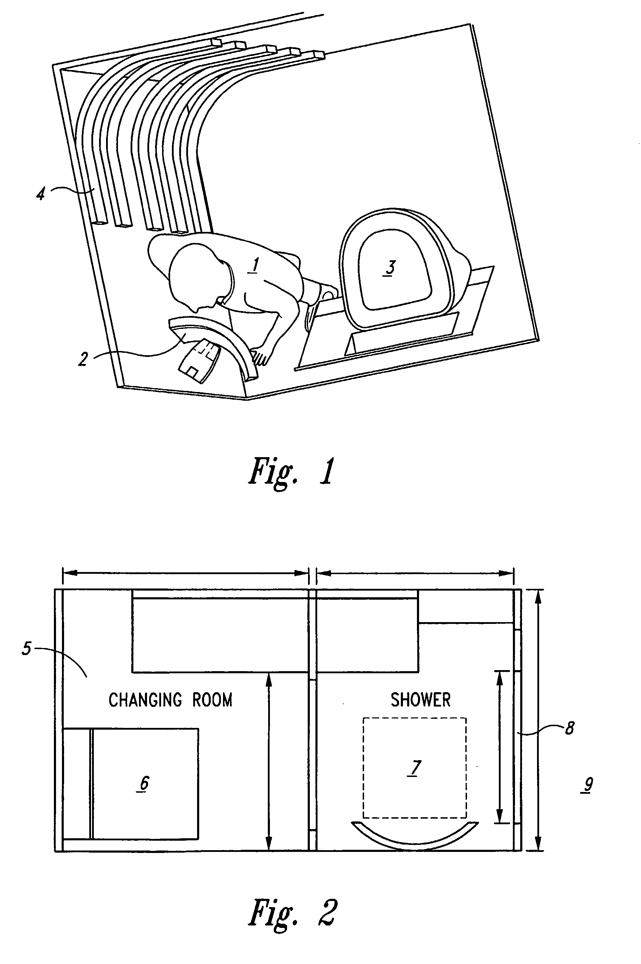

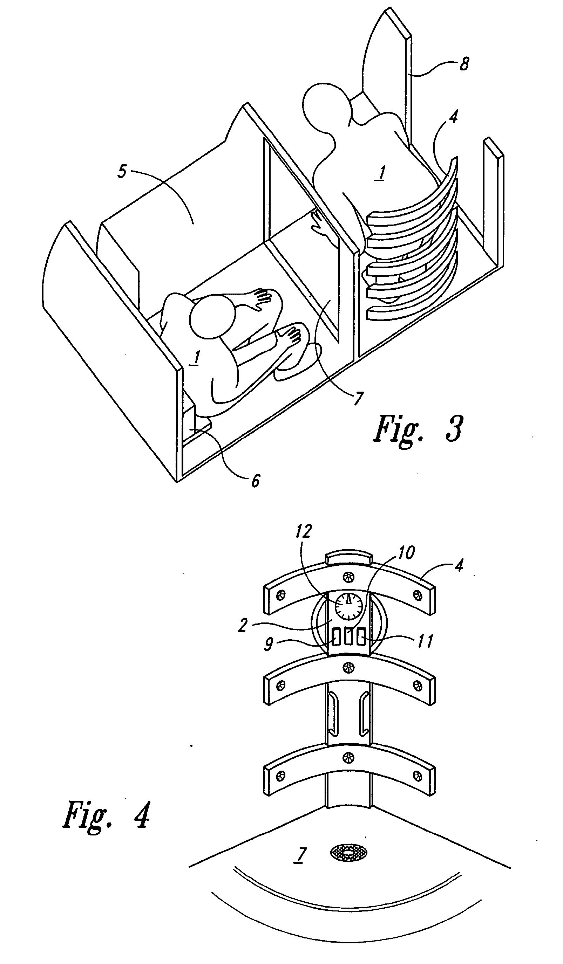

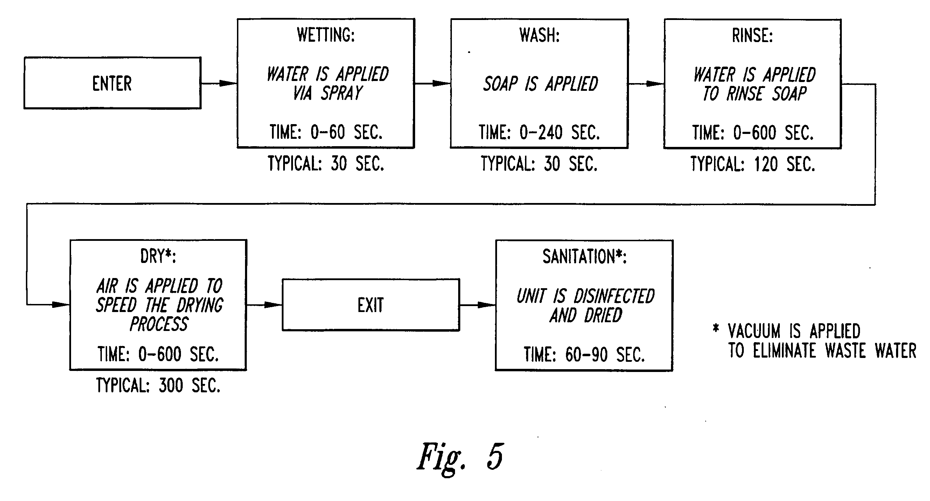

Referring now to the drawings, Fig. 1 shows a passenger 1 standing in a single floor area including a lavatory toilet unit 3, the passenger 1 facing sink. Horizontal arms 4 shown on the left of passenger 1 (also described in more detail in Fig.4) are utilized in the cleaning process as described in the flow diagram of Fig.5.

The cleansing system embodiment of Fig.2 is utilized in aircraft having more space available and located preferably adjacent to the emergency escape doors while the aircraft is in flight. The passenger utilizing shower 7 first enters changing room 5 provided with a seat 6 as seen also in Fig.6. Once disrobed, the passenger in changing room 5 enters cleansing chamber 7 utilizing the operating controls shown in more detail in Fig.4. Upon completion of the cleansing process the passenger could exit cleansing chamber 7 through exit 8 into an adjacent lavatory (not shown) to dress. An unoccupied changing room 5 could also be used to dress unless increased speed in processing passengers is desired and a further passenger in changing room 5 is ready to use cleansing chamber 7.

Turning now to Fig.4, there is shown the structure and operating controls for sequencing the cleansing process detailed in the flow chart of Fig.5. Three horizontal arms 4 are utilized to dispense water,cleaning solution, and air drying (if that feature is selected by the passenger).Three control buttons setting timers, 9, 10, and 11 are provided for the passenger being cleaned to make the selections (within the limits shown in the flow chart of Fig.5). The first timer 9 activates the cleansing system process and starts the wetting process. Timing indicator 12 then shows progress during the wetting cycle. Progress then proceeds through all four stages of the cleansing cycle. If the wetting cycle is only fifty percent complete and the passenger is thoroughly wetted, the passenger can then activate the cleaning cycle by starting timer control 10 which causes application of a cleansing agent followed by a period allowing the person to apply the cleansing agent. Again, as in the first step, the passenger can activate the next timer 11 to activate the rinse cycle. The air drying process follows (as seen in the flow chart of Fig.5).

As seen in the flow chart of Fig.5 upon exiting of the passenger through door 8, the cleansing system operation is completed through a sanitation step where shower unit 7 is disinfected and dried. The individual cleaning process will vary according to the individual passenger timing selections and will usually take approximately 10 minutes but limits are set as shown in the flow chart of Fig. 5 in the interest in maximizing the number of passengers that can be processed. Waste water passing through the drain shown in the bottom of cleansing chamber 7 of Fig.4 may be replaced or sanitized for reuse.

## Claims

1. A method for sequencing a plurality of persons (1) through a cleansing system comprising:
providing a lavatory (3);
providing a cleansing chamber (7) adjacent said lavatory (3);
wetting a first of said plurality of persons (1) entering said cleansing chamber (7) for a person selectable time within a first predetermined time period being less than 60 seconds;
washing said first of said plurality of persons (1) for a person selectable time period within a second predetermined time period being less than 240 seconds;
rinsing said first of said plurality of persons for a selectable time period within a third predetermined time period being less than 600 seconds;
drying said first of said plurality of persons (1) for a person selectable time period within a fourth predetermined time period being less than 600 seconds;
exiting said first of said plurality of persons (1); and
sanitizing said shower area (7) for a fifth predetermined time period being less than 90 seconds prior to entry of a second of said plurality of persons.

2. The method according to claim 1, wherein the lavartory and the cleansing room are provided in an aircraft.

3. The method according to claim 2, wherein the persons (1) are passengers (1).

4. The method according to any of the claims 1-3, wherein the first, second or third predetermined time period is started (10) by user activation.

5. The method according to any of the claims 1-4, wherein said cleansing chamber (7) is dried.

6. The method according to any of the claims 1-5, wherein waste water is reused.

7. A high speed cleansing system comprising:
a cleansing chamber (7) including a shower (4) ; and
controls for controlling time periods for a sequentially wetting, washing, rinsing, and drying a person; **characterised in that** the cleansing system comprises
a changing room (5) ;
said cleansing chamber is adjacent to the changing room;
said controls having control buttons (9,10,11) in said cleansing chamber (7) operable by the person (1) for setting said time periods below a predetermined time limit for the sequential stages for cleansing persons; and
wherein said predetermined time period for wetting is 60 seconds, wherein said predetermined time period for washing is 240 seconds, wherein said predetermined time period for rinsing is 600 seconds, and wherein said predetermined time period for drying is 600 seconds.

8. An aircraft comprising a cleansing system according to claim 7.

## Patentansprüche

1. Verfahren zum Sequentieren von mehreren Personen (1) durch ein Reinigungssystem, mit:
Bereitstellen einer Toilette (3) ;
Bereitstellen einer Reinigungskammer (7) angrenzend an die Toilette (3);
Befeuchtung einer ersten der mehreren Personen (1), die in die Reinigungskammer (7) eintritt, für einen Zeitraum, der von einer Person ausgewählt werden kann und innerhalb eines ersten vorbestimmten Zeitraums von weniger als 60 Sekunden liegt;
Waschen der ersten der mehreren Personen (1) für einen Zeitraum, der von einer Person ausgewählt werden kann und innerhalb eines zweiten vorbestimmten Zeitraums von weniger als 240 Sekunden liegt;
Spülen der ersten der mehreren Personen (1) für einen auswählbaren Zeitraum, der innerhalb eines dritten vorbestimmten Zeitraums von weniger als 600 Sekunden liegt;
Trocknen der ersten der mehreren Personen (1) für einen Zeitraum, der von einer Person ausgewählt werden kann und innerhalb eines vierten vorbestimmten Zeitraums von weniger als 600 Sekunden liegt;
die erste der mehreren Personen (1) zum Verlassen bringen; und
hygienische Reinigung des Duschbereichs (7) für einen fünften vorbestimmten Zeitraum, der kürzer als 90 Sekunden ist, vor dem Eintritt einer zweiten der mehreren Personen.

2. Verfahren gemäß Anspruch 1, wobei die Toilette und der Reinigungsraum in einem Flugzeug vorgesehen sind.

3. Verfahren gemäß Anspruch 2, wobei die Personen (1) Passagiere (1) sind.

4. Verfahren gemäß einem der Ansprüche 1 bis 3, wobei der erste, zweite oder dritte vorbestimmte Zeitraum durch Benutzeraktivierung begonnen (10) wird.

5. Verfahren gemäß einem der Ansprüche 1 bis 4, wobei die Reinigungskammer (7) getrocknet wird.

6. Verfahren gemäß einem der Ansprüche 1 bis 5, wobei das Abwasser wiederverwendet wird.

7. Ein Hochgeschwindigkeits-Reinigungssystem mit:
einer Reinigungskammer (7), die eine Dusche (4) enthält; und
Steuereinheiten zur Steuerung von Zeiträumen für sequentielles Befeuchten, Waschen, Spülen und Trocknen einer Person;
**dadurch gekennzeichnet, dass** das Reinigungssystem enthält:
einen Umkleideraum (5);
wobei der Reinigungsraum angrenzend an den Umkleideraum ist;
die Steuereinheiten Steuertasten (9, 10, 11) in dem Reinigungsraum (7) aufweisen, die durch die Person (1) betätigbar sind, zum Einstellen der Zeiträume kleiner als eine vorbestimmte Zeitgrenze für die sequentiellen Stufen für zu reinigende Personen; und
wobei der vorbestimmte Zeitraum zur Befeuchtung 60 Sekunden ist, wobei der vorbestimmte Zeitraum zum Waschen 240 Sekunden ist, wobei der vorbestimmte Zeitraum zur Spülung 600 Sekunden ist, und wobei der vorbestimmte Zeitraum zum Trocknen 600 Sekunden ist.

8. Ein Flugzeug mit einem Reinigungssystem nach Anspruch 7.

## Revendications

1. Procédé pour faire passer en séquences une pluralité de personnes (1) à travers un système de nettoyage, comprenant les étapes consistant à :
prévoir des toilettes (3) ;
prévoir une chambre de nettoyage (7) d'une manière adjacente auxdites toilettes (3) ;
mouiller une première de ladite pluralité de personnes (1) entrant dans ladite chambre de nettoyage (7) pendant un temps pouvant être sélectionné par la personne durant une première période de temps prédéterminée qui est inférieure à 60 secondes ;
laver ladite première de ladite pluralité de personnes (1) pendant une période de temps pouvant être sélectionnée par la personne durant une deuxième période de temps prédéterminée qui est inférieure à 240 secondes ;
rincer ladite première de ladite pluralité de personnes pendant une période de temps pouvant être sélectionnée durant une troisième période de temps prédéterminée qui est inférieure à 600 secondes ;
sécher ladite première de ladite pluralité de personnes (1) pendant une période de temps pouvant être sélectionnée par la personne durant une quatrième période de temps prédéterminée qui est inférieure à 600 secondes ;
faire sortir ladite première de ladite pluralité de personnes (1) ; et
désinfecter ladite zone de douche (7) durant une cinquième période de temps prédéterminée qui est inférieure à 90 secondes avant l'entrée d'une deuxième de ladite pluralité de personnes.

2. Procédé selon la revendication 1, où les toilettes et la pièce de nettoyage sont réalisées dans un avion.

3. Procédé selon la revendication 2, où les personnes (1) sont des passagers (1).

4. Procédé selon l'une des revendications 1 à 3, où la première, deuxième ou troisième période de temps prédéterminée est démarrée (10) par l'activation par l'utilisateur.

5. Procédé selon l'une des revendications 1 à 4, où ladite chambre de nettoyage (7) est séchée.

6. Procédé selon l'une des revendications 1 à 5, où les eaux usées sont réutilisées.

7. Système de nettoyage à vitesse élevée comprenant :
une chambre de nettoyage (7) avec une douche (4) ; et
des commandes pour commander des périodes de temps pour mouiller, laver, rincer et sécher séquentiellement une personne ; **caractérisé en ce que** le système de nettoyage comprend
une cabine de déshabillage (5) ;
ladite chambre de nettoyage est adjacente à ladite cabine de déshabillage ;
lesdites commandes ayant des boutons de commande (9, 10, 11) dans ladite chambre de nettoyage (7) actionnables par la personne (1) pour régler lesdites périodes de temps pour qu'elles soient inférieures à une limite de temps prédéterminée pour des stades séquentiels pour le nettoyage de personnes ; et
où ladite période de temps prédéterminée pour le mouillage est de 60 secondes, où ladite période de temps prédéterminée pour le lavage est de 240 secondes, où ladite période de temps prédéterminée pour le rinçage est de 600 secondes et où ladite période de temps prédéterminée pour le séchage est de 600 secondes.

8. Avion comprenant un système de nettoyage selon la revendication 7.
